# EUROPÄISCHE PATENTSCHRIFT

(11) **EP 1 818 256 B1**
(45) Veröffentlichungstag und Bekanntmachung des Hinweises auf die Patenterteilung: **18.06.2008**
(21) Anmeldenummer: 06002980.8
(22) Anmeldetag: 14.02.2006
(51) Int. Cl.: B64C 27/00, B64D 47/02

(54) **Luftfahrzeug, insbesondere Hubschrauber**
Aircraft, in particular helicopter
Avion, en particulier hélicoptère

(43) Veröffentlichungstag der Anmeldung: 15.08.2007
(73) Patentinhaber: Lufthansa Technik AG, 22335 Hamburg (DE)
(72) Erfinder: Lierow, Hans-Christian, 22339 Hamburg (DE)
(74) Vertreter: Glawe, Delfs, Moll

(56) Entgegenhaltungen:
- WO-A-20/04076280
- US-A- 4 365 232
- US-A- 4 597 033
- US-A- 5 839 718
- [Online] XP007900906 Gefunden im Internet: URL:http://web.archive.org/web/20040930103 257/http://www.led-sign.de/> [gefunden am 2004-09-30]

## Beschreibung

Die Erfindung betrifft ein Luftfahrzeug, insbesondere Hubschrauber, mit am Rand von wenigstens einigen Fenstern angebrachten leisten- oder streifenförmigen Leuchtelementen.

Ein solcher Hubschrauber ist ebenfalls bekannt aus US 4,365,232, welches den nächstliegenden Stand der Technik darstellt und den Oberbegriff des Anspruchs 1 offenbart.

Bei vielen Luftfahrzeugen, insbesondere bei Hubschraubern ist es im Notfall erforderlich, das Luftfahrzeug durch ein Fenster zu verlassen. Hubschrauber besitzen zum Beispiel Schiebetüren, die sich bei einem Unfall verklemmen können, so dass sie nicht mehr geöffnet werden können. Besatzung und Passagiere des Hubschraubers müssen dann denselben durch ein Fenster verlassen, das entweder eingeschlagen wird oder aber mit einer Einrichtung versehen ist, dass die Scheibe leicht entfernt werden kann.

Damit die im Hubschrauber befindlichen Personen auch bei Dunkelheit und Rauchentwicklung die Fenster erkennen können, durch die sie den Hubschrauber verlassen können, oder damit Helfer von außen diese Fenster auch in trübem Wasser erkennen können, ist es bekannt, am Rand von wenigstens einigen Fenstern leisten- oder streifenförmige Leuchtelemente vorzusehen, die mit einer Notstromversorgung verbunden sind, die im Falle eines Unfalls eingeschaltet beziehungsweise mit den Leuchtelementen verbunden wird. Die Leuchtelemente weisen zu diesem Zweck zum Beispiel Glühlampen oder LEDs auf.

Der Nachteil besteht dabei einmal darin, dass die Notstromversorgung versagen kann. Die für diesen Zweck vorgesehene Notstromversorgung und die Glühlampen oder LEDs sind auch relativ teuer.

Die Aufgabe der Erfindung besteht in der Schaffung eines Luftfahrzeugs der eingangs genannten Art, bei dem die Notbeleuchtung kostengünstiger herzustellen ist und zuverlässiger arbeitet.

Die erfindungsgemäße Lösung besteht darin, dass die Leuchtelemente mit photoluminizentem Material versehen sind. Die photoluminizenten Leuchtelemente benötigen keine separate Energiequelle. Sie werden durch Tageslicht, Kabinenbeleuchtung usw. zum Leuchten gebracht und leuchten auch einige Zeit nach, nach dem die Beleuchtung beendet ist.

Es wird also auf Glühlampen oder LEDs und eine Notstromversorgung zum Speisen derselben verzichtet. Das System ist dadurch einfacher und sicherer. Es ist zwar bekannt, in Flugzeugen photoluminizente Leuchtstreifen vorzusehen, mit denen Besatzung und Passagieren bei einem Unfall der Weg zu den Ausgängen gezeigt wird (WO 2004/076280 A1). Die Verwendung solcher Leuchtstreifen hat sich für Flugzeuge zwar als vorteilhaft und zweckmäßig ergeben. Der Verwendung solcher Leuchtstreifen in anderen Luftfahrzeugen, insbesondere Hubschraubern, stehen aber besondere Probleme entgegen, die in Flugzeugen nicht auftreten.

So müssen einerseits die Leuchtstreifen sehr hell leuchten, damit man sie auch bei schwierigen Bedingungen noch erkennen kann. Dies ist z. B. bei Rauchentwicklung der Fall. Bei Flugzeugen ist dieses Problem weniger kritisch, da die Leuchtstreifen am Boden angeordnet sind, während der Rauch nach oben steigt, so dass die Leuchtstreifen auch bei Rauchentwicklung noch zu erkennen sind. Bei Hubschraubern mit ihrem verhältnismäßig kleinen Innenraum ist dies nicht der Fall. Die Leuchtstreifen müssen auch unter schwierigen Bedingungen von außen zu erkennen sein, zum Beispiel wenn sich der Hubschrauber in trübem Wasser befindet, damit Retter die Fenster erkennen können. Auch diese Problematik stellt sich bei Flugzeugen nicht, da dort Retter höchstens die Türen öffnen müssen, die aber mit solchen Leuchtstreifen nicht versehen werden können, da die Türen undurchsichtig sind.

Während Glühlampen oder LEDs eine ausreichende Helligkeit haben können, damit man die Fenster auch bei schwierigen Bedingungen erkennen kann, ist die Leuchtstärke von photoluminizentem Leuchtelementen begrenzt. Es ist das Verdienst der Erfindung, erkannt zu haben, dass durch geeignete Wahl der Dicke der leuchtenden Schicht der Leuchtelemente und durch entsprechend hohe Pigmentkonzentration eine ausreichende Helligkeit erreicht werden kann.

Die Erfindung hat aber auch das Vorurteil überwunden, dass durch die hohe Leuchtkraft der Leuchtelemente bei Nachtflügen die Sicht des Piloten behindert wird. Bei den vorbekannten Leuchtelementen mit Glühlampen oder LEDs besteht diese Problematik nicht. Da diese erst bei einem Unfall eingeschaltet werden, können sie, auch wenn sie dann sehr hell leuchten, die Sicht des Piloten bei Nachtflügen nicht behindern, da sie während des normalen Flugs ausgeschaltet sind. Auch bei den vorbekannten photoluminizenten Leuchtstreifen in Flugzeugen besteht diese Problematik nicht,, da die Passagierkabine ohnehin beleuchtet ist und Licht aus der Passagierkabinen nicht in das Cockpit dringt.

Es ist das Verdienst der Erfindung, erkannt zu haben, dass die erfindungsgemäßen Leuchtelemente einerseits hell genug sein können, andererseits aber die Sicht des Piloten bei Nachtflügen nicht behindern.

Bei einer vorteilhaften Ausführungsform ist vorgesehen, dass das Luftfahrzeug am Rand der Fenster Leuchtelemente unterschiedlicher Farben aufweist. Dadurch können Hinweise gegeben werden, welche Fenster als Notausstiege besonders geeignet sind. Eine ähnliche Wirkung kann erzielt werden, wenn das Luftfahrzeug Leuchtelemente unterschiedliche Helligkeit aufweist.

Zweckmäßigerweise sind wenigstens einige Fenster vollständig durch Leuchtelemente umrandet. Andererseits kann vorgesehenen sein, dass einige Fenster nur teilweise durch Leuchtelemente umrandet sind. So könnte man bei einigen Fenstern den Teil der Umrandung nicht mit Leuchtelementen versehen, der durch Spiegelung in der Frontscheibe die Sicht des Piloten behindern würde.

## Patentansprüche

1. Luftfahrzeug, insbesondere Hubschrauber, mit am Rand von wenigstens einigen Fenstern angebrachten leisten- oder streifenförmigen Leuchtelementen, **dadurch gekennzeichnet, dass** die Leuchtelemente mit photoluminizentem Material versehen sind.

2. Luftfahrzeug nach Anspruch 1, **dadurch gekennzeichnet, dass** es Leuchtelemente unterschiedlicher Farben aufweist.

3. Luftfahrzeug nach Anspruch 1 oder 2, **dadurch gekennzeichnet, dass** es Leuchtelemente unterschiedlicher Helligkeit aufweist.

4. Luftfahrzeug nach einem der Ansprüche 1 bis 3, **dadurch gekennzeichnet, dass** einige Fenster vollständig durch Leuchtelemente

5. Luftfahrzeug nach einem der Ansprüche 1 bis 4, **dadurch gekennzeichnet, dass** einige Fenster nur teilweise durch Leuchtelemente umrandet sind.

## Claims

1. Aircraft, in particular a helicopter, with bar- or strip-shaped lighting elements located at the edge of at least some windows, **characterised in that** the lighting elements are provided with photoluminescent material.

2. Aircraft according to Claim 1, **characterised in that** it has lighting elements of different colours.

3. Aircraft according to Claim 1 or 2, **characterised in that** it has lighting elements of differing brightness.

4. Aircraft according to any one of Claims 1 to 3, **characterised in that** some windows are entirely edged by lighting elements.

5. Aircraft according to any one of Claims 1 to 4, **characterised in that** some windows are only partially edged by lighting elements.

## Revendications

1. Aéronef, notamment hélicoptère, comportant des éléments luminescents en forme de baguettes ou de bandes au bord d'au moins quelques fenêtres, **caractérisé en ce que** les éléments luminescents sont pourvus d'un matériau photoluminescent.

2. Aéronef selon la revendication 1, **caractérisé en ce que** les éléments luminescents présentent différentes couleurs.

3. Aéronef selon les revendications 1 ou 2, **caractérisé en ce qu'**il présente des éléments luminescents de différentes luminosités.

4. Aéronef selon les revendications 1 à 3, **caractérisé en ce que** quelques fenêtres sont entièrement bordées d'éléments luminescents.

5. Aéronef selon les revendications 1 à 4, **caractérisé en ce que** quelques fenêtres ne sont que partiellement bordées d'éléments luminescents.
